# EUROPEAN PATENT APPLICATION

(11) **EP 3 282 210 A1**
(43) Date of publication of application: **14.02.2018**
(21) Application number: 16183288.6
(22) Date of filing: 09.08.2016
(51) Int. Cl.: F25B 15/06, F01K 23/00, F25B 27/02

(54) **INDEPENDENT ABSORPTION CHILLING SYSTEM**

(71) Applicant: Gadlab Engineering Oy, 00620 Helsinki (FI)
(72) Inventor: Mattsson, Jorma Kalevi, 00930 Helsinki (FI)
(74) Representative: LEITZINGER OY

(57) **Abstract**

The present invention provides an absorption chilling system for a marine vessel which system can be operated independently from electrical systems of the marine vessel. The chilling system uses only heat (10, 11, 13) as an input to the chilling system. The input of heat is converted partially into electrical energy in a low pressure turbine (103) and the remaining heat is used in an absorption type chiller unit (101) for providing cooling for an air cooling unit (102). The electricity generated with the low pressure turbine (103) is used for operating pumps (8, 34, 35), fans (105) and other devices (101, 102, 9) and preferably also for monitoring and controlling said operation with a control unit (104).

## Description

### FIELD OF THE INVENTION

The present invention relates to an absorption chilling system for marine vessels and especially to an absorption chilling system which can be operated independently without a connection to vessel's electrical system.

### BACKGROUND OF THE INVENTION

Passenger cruise ships and other marine vessels have air conditioning or air cooling systems for cooling interior spaces of the vessels. In hot climates, air conditioning is vital and it must be constantly kept in operation for the well-being of passengers and staff. These systems are typically driven by compressor refrigerators which need power from an auxiliary engine and/or an electric generator. In case of a black-out in the vessel's electrical system, an emergency electrical system is used for the most important operations which does not include the air conditioning.

One of the problems associated with the above arrangement is that the emergency electrical systems are incapable of providing enough power for running air conditioning. Thus the conditions inside a vessel quickly become unpleasant for the passengers and staff during a black-out in the vessel's electrical system. Another problem is that the compressor driven refrigerator system needs a lot of power from the engine and/or electric generator which makes a significant part of the vessel's total energy consumption.

### BRIEF DESCRIPTION OF THE INVENTION

An object of the present invention is to provide an absorption chilling system for a marine vessel which can be operated independently from electrical system of the marine vessel.

The present invention is based on the idea of using only heat as an input to a chilling system. The input of heat first converted partially into electrical energy in a low pressure turbine and the remaining heat is used in an absorption type chiller unit for providing cooling for an air cooling unit. The electricity generated with the low pressure turbine is used for operating pumps, fans and other devices and preferably also for monitoring and controlling said operation.

An advantage of the arrangement of the present invention is that the chilling system does not rely on input of electrical energy and it only uses surplus heat generated at combustion process of the vessel's engine(s). Therefore the chilling system decreases fuel consumption of the vessel and is not disturbed by black-outs in the vessel's electrical system.

### BRIEF DESCRIPTION OF THE DRAWINGS

In the following the present invention is described in greater detail by means of preferred embodiments with reference to the accompanying drawings, in which
Figure 1 illustrates a chilling system according to an embodiment of the present invention, and
Figure 2 illustrates electrical connections of a chilling system according to an embodiment of the present invention.

### DETAILED DESCRIPTION OF THE INVENTION

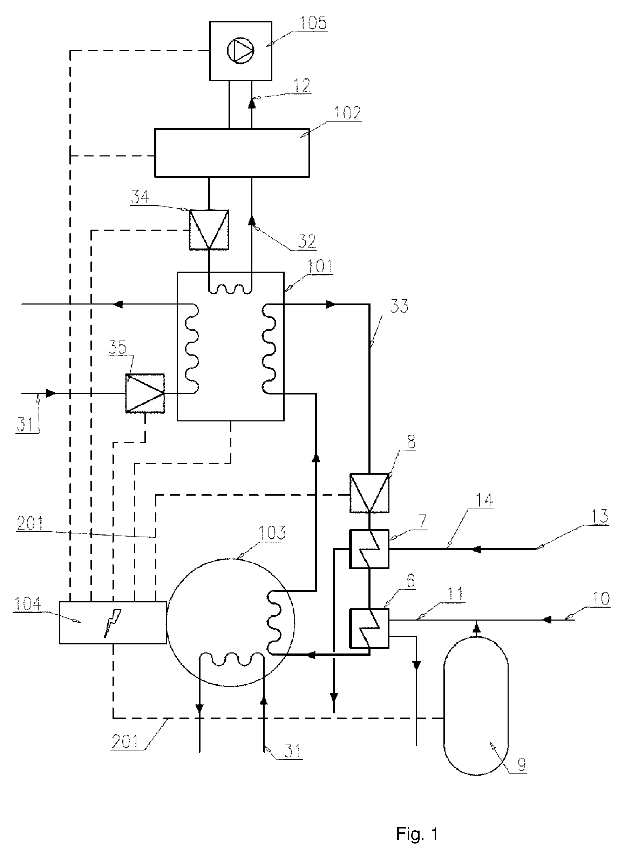

Figure 1 illustrates a chilling system for a marine vessel. Marine vessels typically have powerful combustion engines, such as diesel engines or gas turbines which produce surplus heat which can be utilized in the chilling system described herein.

The chilling system comprises a number of liquid circuits transferring heat from heat sources to units of the chilling system and also between units of the chilling system. The chilling system comprises a heated liquid circuit 33 which is connected to a heated liquid circulation pump 8 for circulating the heated liquid in the heated liquid circuit. The heated liquid circulation pump pumps the heated liquid through one or preferably two or more heat exchangers 6, 7 to which one or more heat sources are also connected for providing one or more external sources of heat to the chilling system. Preferably, a main external source of heat is surplus heat 10 of a combustion engine of the marine vessel housing the chilling system. Running temperature of a combustion engine is typically controlled by circulating a cooling liquid through ducts within the combustion engine so that the combustion engine is kept in desired temperature, such as 80 to 120 degrees Celsius or preferably 90 to 100 degree Celsius. This circulation of combustion engine cooling liquid is connected to one of the heat exchangers 6 of the heated liquid circuit for transferring heat from the combustion engine to the heated liquid circuit. The circulation of combustion engine cooling liquid can be supplemented with steam 11 from an auxiliary boiler 9 before the liquid enters the heat exchanger 6 of the heated liquid circuit. The output of steam from the auxiliary boiler can also be directed to another heat exchanger connected to the heated liquid circuit. Similarly, any other heat sources 13 in forms of hot liquid 14 or steam can be used to increase temperature of the heated liquid circuit by connecting the heat source to a heat exchanger 6, 7 of the heated liquid circuit.

The temperature of the heated liquid in the heated liquid circuit reaches its maximum temperature after the last heat exchanger 6 in direction of circulation. The heated liquid circuit is connected to a hot side of a low pressure turbine 103 after the last heat exchanger. The low pressure turbine converts heat of the heated liquid into rotation of a turbine which is converted into electrical energy with a generator thereby producing electricity and extracting heat from the heated liquid thereby cooling down the heated liquid. Available low pressure turbine generators can use heat sources having temperatures from 70 degrees Celsius to produce electric energy. The electric energy can be used in units of the system by using electrical connections 201 between the units and the low pressure turbine 103. In an embodiment two or more low pressure turbines are can be used in parallel. In an embodiment, the units are electrically connected to a control unit 104 which control unit is then connected electrically to the low pressure turbine unit. In an embodiment a steam turbine is used as a low pressure turbine using steam in a relatively low pressure.

The heated liquid is also connected to an absorption type chiller unit 101 into which the heated liquid flows after the low pressure turbine 103. Even though the temperature of the heated liquid decreases in the low pressure turbine, the heated liquid has still enough thermal energy for operating the absorption type chiller unit. The heated liquid is a power source of an absorption cooling process running in the absorption type chiller unit 101. The absorption type chiller unit extracts heat from the heated liquid to heat a working fluid comprising a refrigerant and absorbent, such as a solution of water and lithium bromide, in the generator of the absorption type chiller unit and evaporate water from the working fluid, thereby lowering the temperature of the heated liquid which circulates from the absorption type chiller unit to heated liquid circulation pump 8 and the heat exchangers 6, 7 for raising the temperature of the heated liquid again. In the description water is used as an example of refrigerant and lithium bromide is used as an example of an absorbent but also other suitable refrigerants and absorbents can be used.

The chilling system also comprises a cooling liquid circuit 31 which is connected to a cooling liquid circulation pump 35 for circulating the cooling liquid in the cooling liquid circuit 31. The cooling liquid is arranged to have a lower temperature than the heated liquid. Preferably the cooling liquid is kept in a relatively low temperature by dissipating heat from the cooling liquid to the sea where the marine vessel is sailing.

The cooling liquid circuit 31 is also connected to the absorption type chiller unit 101. The cooling liquid of the cooling liquid circuit 31 extracts heat from the absorption cooling process thereby condensing and lowering the temperature of the water evaporated from the solution of water and lithium bromide in the condenser of the absorption type chiller unit 101.

The cooling liquid circuit 31 can also be connected to a cold side of the low pressure turbine 103. The low pressure turbine and the absorption type chiller unit can be connected in series to the cooling liquid circuit which preferably circulates from the low pressure turbine to the absorption type chiller unit in this case. The low pressure turbine and the absorption type chiller unit can also be connected in parallel to the cooling liquid circuit. The low pressure turbine can also be connected to an auxiliary cooling liquid circuit providing cooling liquid only for the low pressure turbine. The cooling liquid circuit can also be connected to other units that require extraction of heat.

The chilling system further comprises a chilled liquid circuit 32 connected to a chilled liquid circulation pump 34 for circulating the chilled liquid in the chilled liquid circuit 32. The chilled liquid circuit 32 is also connected to the absorption type chiller unit 101 which is arranged to cool the chilled liquid in the chilled liquid circuit 32 in the absorption cooling process using thermal energy provided by the heated liquid circuit 33. The working fluid evaporates in an evaporator of the absorption type chiller unit by extracting heat from the chilled liquid circuit thereby lowering the temperature of the chilled liquid. The chilled liquid is therefore colder than the cooling liquid in the cooling liquid circuit and the chilled liquid can be used for extracting heat from areas and units requiring chilling, i.e. consumers of chilling.

The chilled liquid circuit is therefore also connected to an air cooling unit 102, i.e. an air conditioning unit, which is arranged to transfer heat from air to the chilled liquid circuit 32 thereby providing cooling 12 of the air in one or more locations. The cooling of air can be facilitated with one or more electric fans 105.

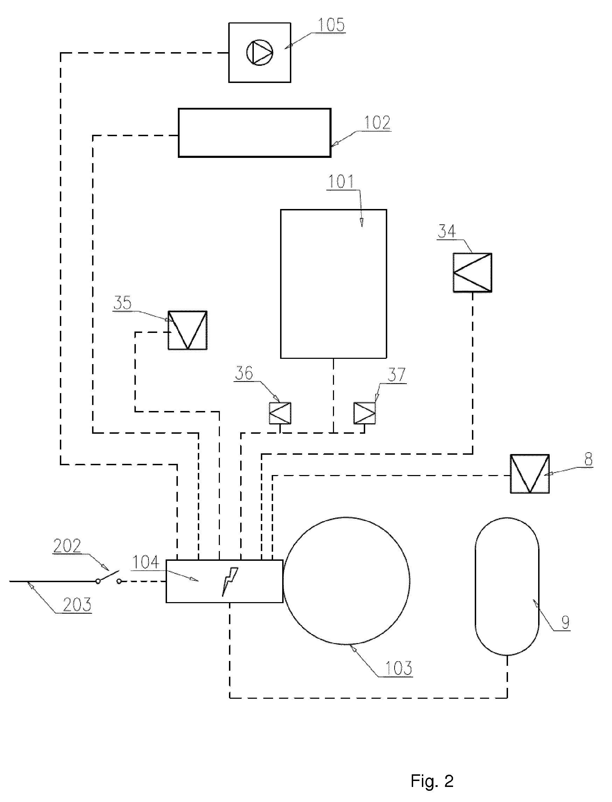

Figure 2 illustrates electrical connections of the chilling system. As previously described, the low pressure turbine 103 generates electricity using heat of the heated liquid of the heated liquid circuit which in turn is heated by an external heat source. The low pressure turbine 103 can be connected with electrical connections 201 to the heated liquid circulation pump 8, the cooling liquid circulation pump 35 and the chilled liquid circulation pump 34 for providing electric energy to said circulation pumps and also to internal pumps 36, 37 of the absorption type chiller unit. The electric fans 105 can also be powered by the low pressure turbine. Also an auxiliary boiler 9 can be used and be connected electrically to the low pressure turbine for heating water and creating steam in the boiler. The steam 11 can be used as a heat source for the heated liquid circuit 33.

Preferably the low pressure turbine provides electricity to a control unit 104 and the heated liquid circulation pump 8, cooling liquid circulation pump 35, chilled liquid circulation pump 34, internal pumps 36, 37 of the absorption type chiller unit 101, fans 105, boiler 9, absorption type chiller unit 101 and/or air control unit 102 are connected to the control unit 104. One or more, or each, of the devices connected to the control unit 104 can be controlled with the control unit and preferably monitored with sensors for providing more accurate control. The heated liquid circulation pump 8, cooling liquid circulation pump 35, chilled liquid circulation pump 34, internal pumps 36, 37 of the absorption type chiller unit 101, fans 105, boiler 9, absorption type chiller unit 101 and/or air control unit 102 can have one or more sensors, such as temperature sensor, mass flow sensor, humidity sensor, pressure sensor or some other sensor which is arranged to be read by the control unit. The control unit is arranged to control said devices based on the data provided by the sensors and the devices are arranged to be driven with inverters for more accurate control.

The control unit is preferably programmable and various limits can be set for sensor readings. For example, a minimum temperature, optimal temperature and maximum temperature can be set for various sensors and in case the control unit 104 receives enough electrical energy from the low pressure turbine 103, the control unit controls the devices so that the sensors detect the optimal temperature. Any excess electrical energy can be used in the auxiliary boiler 9 for heating water and producing steam. On the other hand, if the supply of electrical energy is temporarily insufficient, the control unit controls the devices so that the minimum and maximum temperature limits are not breached. The same applies for other measured parameters, such as mass flow, humidity, pressure, etc. When a sufficient supply of electrical energy is detected, the control unit controls the devices so that the set optimal values are reached and maintained again.

The chilling system preferably comprises a power switch 202 between electrical connection of the control unit 104 and an emergency electrical supply 203, such as a main electrical system of the marine vessel or a backup battery. The power switch 202 is preferably arranged to remain open when the low pressure turbine 103 produces electrical energy for the control unit so the chilling system is independent from other electrical systems within the marine vessel and operated without any external input of electrical energy. Therefore the cooling of air continues even if a black-out takes place in other electrical systems of the marine vessel and the chilling system will not need electrical energy from an emergency generator. This allows for downsizing of the emergency generator which may lead to significant savings in terms of space, and also money.

In a situation where the low pressure turbine 103 does not produce enough, or at all, electrical energy for the control unit 104 to operate the devices of the chilling system, the power switch 202 is arranged to be closed for providing electrical energy to the chilling system. Preferably the low pressure turbine is bypassed and/or disconnected from the chilling system when the power switch 202 is closed to prevent any disturbances or interference to the emergency electrical supply, such as the main electrical system of the marine vessel.

An aspect of the present invention is a method of cooling air in a marine vessel. The method comprises step of providing an input of hot fluid 10, 11 to a heat exchanger 6. Preferably, a main external source of heat is surplus heat 10 of a combustion engine of the marine vessel housing the chilling system. This can be supplemented with steam from an auxiliary boiler 9. Steam from the auxiliary boiler can also be used for superheating the input of hot fluid 10 prior to the heat exchanger 6.

The method further comprises a step of circulating a heated liquid through said heat exchanger 6 for transferring thermal energy from said hot fluid to the heated liquid of a heated fluid circuit 33. The circulating can be realised with an electric pump which pumps the heated liquid.

The method also comprises a step of converting thermal energy of the heated liquid in a low pressure turbine 103 into electrical energy. The low pressure turbine converts heat of the heated liquid into electrical energy thereby producing electricity and extracting heat from the heated liquid thereby cooling down the heated liquid.

The method further comprises a step of circulating the heated liquid through a generator of an absorption type chiller unit for evaporating water of a solution of water and lithium bromide which is a working fluid of the absorption type chiller unit.

The method further comprises a step of circulating a cooling liquid through a condenser of said absorption type chiller unit for cooling and condensing water vapour. The circulating can be realised with an electric pump which pumps the cooling liquid. The cooling liquid can be sea water which is pumped from the sea and returned back to the sea or the cooling liquid can be some other liquid that is circulated through a heat exchanger which is cooled with sea water.

The method also comprises a step of circulating a chilling liquid through an evaporator of said absorption type chiller unit for extracting heat from the chilling liquid thereby cooling down the chilling liquid. The circulating can be realised with an electric pump which pumps the chilling liquid.

The method further comprises step of circulating the chilling liquid through an air cooling unit for cooling air. The chilling liquid can be divided to a number of air cooling units. The cooling of air can be facilitated by operating an electric fan 105 to move air more rapidly through a heat exchanger which extracts heat from the air and transfers the extracted heat to the chilling liquid thereby cooling the air that passes through the heat exchanger.

The method further comprises step of using only the electrical energy converted by the low pressure turbine 103 for operating pumps which provide said circulations of heated liquid, cooling liquid and chilling liquid. In an embodiment fan 105 or multiple fans are also operated solely using the electrical energy converted by the low pressure turbine 103.

In an embodiment the method further comprises a step of controlling said circulations of said heated liquid, cooling liquid and chilling liquid based on available electrical energy from said low pressure turbine 103.

In an embodiment the method further comprises a step of measuring temperatures of said heated liquid, cooling liquid and chilling liquid and controlling said circulations based on said measurements. In an embodiment the step also includes measuring air temperature at the air cooling unit 102 or at the fan 105. The controlling preferably includes setting a multiple limits for sensor readings. For example, a minimum temperature, optimal temperature and maximum temperature can be set for various sensors and in case the control unit 104 receives enough electrical energy from the low pressure turbine 103, the control unit controls the devices so that the sensors detect the optimal temperature. Any excess electrical energy can be used in the auxiliary boiler 9 for heating water and producing steam. On the other hand, if the supply of electrical energy is temporarily insufficient, the control unit controls the devices so that the minimum and maximum temperature limits are not breached. The same applies for other measured parameters, such as mass flow, humidity, pressure, etc. When a sufficient supply of electrical energy is detected, the control unit controls the devices so that the set optimal values are reached and maintained again.

In an embodiment the method comprises step of operating a power switch 202 for connecting and disconnecting an external supply of electrical energy 203, such as a main electrical system of the marine vessel or a backup battery. The power switch 202 is preferably kept open when the low pressure turbine 103 produces enough electrical energy for controlling and operating said pumps and fans without any external input of electrical energy. Therefore the cooling of air continues even if a black-out takes place in other electrical systems of the marine vessel. In a situation where the low pressure turbine 103 does not produce enough, or at all, electrical energy for controlling and operating the pumps and fans, the power switch 202 is closed for providing electrical energy for controlling and operating the pumps and fans. Preferably the low pressure turbine is bypassed and/or disconnected when the power switch 202 is closed to prevent any disturbances or interference to the external supply of electrical energy.

It will be obvious to a person skilled in the art that, as the technology advances, that the inventive concept can be implemented in various ways. The present invention and its embodiments are not limited to the examples described above but may vary within the scope of the claims.

## Claims

1. A chilling system for a marine vessel, the chilling system comprising
a heated liquid circuit (33) connected to
a heated liquid circulation pump (8) for circulating the heated liquid in the heated liquid circuit,
one or more heat exchangers (6, 7) for transferring heat from one or more heat sources (9, 10, 13) to the heated liquid circuit (33),
a low pressure turbine (103) for converting heat of the heated liquid into electricity, and
an absorption type chiller unit (101) for using the heat of the heated liquid in an absorption cooling process,
the chilling system further comprising a cooling liquid circuit (31) connected to
a cooling liquid circulation pump (35) for circulating the cooling liquid in the cooling liquid circuit (31), which cooling liquid is arranged to have a lower temperature than the heated liquid, and the absorption type chiller unit (101) for using the cooling liquid for extracting heat from the absorption cooling process, the low pressure turbine (103) for extracting heat from the low pressure turbine (103),
the chilling system further comprising a chilled liquid circuit (32) connected to
a chilled liquid circulation pump (34) for circulating the chilled liquid in the chilled liquid circuit (32),
the absorption type chiller unit (101) arranged to cool the chilled liquid in the chilled liquid circuit (32) in an absorption cooling process using thermal energy provided by the heated liquid circuit (33), and
an air cooling unit (102) arranged to transfer heat from air to the chilled liquid circuit (32) thereby cooling the air,
wherein the low pressure turbine (103) is electrically connected to said heated liquid circulation pump (8), cooling liquid circulation pump (35), and chilled liquid circulation pump (34) for providing electric energy to said circulation pumps (8, 35, 34).

2. Chilling system of claim 1, wherein said one or more heat sources (9, 10, 13) are arranged to provide thermal energy to said heated liquid circuit (33) by means of a steam circuit (11) and/or hot temperature liquid circuit (14) connected to said one or more heat exchangers (6, 7) of the heated liquid circuit (33).

3. Chilling system of claim 1 or 2, wherein said one or more heat sources (9, 10, 13) comprises one or more of the following heat sources: surplus heat of a combustion engine and an auxiliary boiler.

4. Chilling system of any one of claims 1 to 3, wherein said circulation pumps (8, 35, 34) and said low pressure turbine (103) are electrically connected to a control unit (104) which is arranged to monitor and control said circulation pumps (8, 35, 34) based on available electrical energy from said low pressure turbine (103).

5. Chilling system of claim 4, wherein the air cooling unit (102) comprises one or more fans (105) for circulating air, wherein said one or more fans (105) are electrically connected to the control unit (104) which is arranged to monitor and control said circulation pumps (8, 35, 34) and said one or more fans (105) based on available electrical energy from said low pressure turbine (103).

6. Chilling system of any one of claims 1 to 5, wherein the system comprises an auxiliary boiler (9) that is connected to a heat exchanger (6) of the heated liquid circuit (33) for providing thermal energy from the auxiliary boiler (9) to the heated liquid circuit (33) and electrically connected to the low pressure turbine (103) for converting electricity generated at the low pressure turbine (103) to thermal energy of a liquid contained within the auxiliary boiler (9).

7. Chilling system of 4, wherein the chilling system further comprises a power switch (202) between electrical connection of the control unit (104) and an emergency electrical supply (203), wherein said power switch (202) is arranged to remain open when the low pressure turbine (103) produces electrical energy, and the switch (202) is arranged to be closed for providing electrical energy to the chilling system when the low pressure turbine (103) is not producing electrical energy.

8. Chilling system of any one of claims 1 to 7, wherein the electrical energy generated at the low pressure turbine (103) is provided for each electrical component of the chilling system, wherein the chilling system is arranged to be operated without any external input of electrical energy.

9. A method of cooling air in a marine vessel, wherein the method comprises steps of:
providing an input of hot fluid (10, 11) to a heat exchanger (6),
circulating a heated liquid through said heat exchanger (6) for transferring thermal energy from said hot fluid to the heated liquid of a heated fluid circuit (33),
converting thermal energy of the heated liquid in a low pressure turbine (103) into electrical energy,
circulating the heated liquid through a generator of an absorption type chiller unit for evaporating water of a solution,
circulating a cooling liquid through a condenser of said absorption type chiller unit for cooling and condensing water vapour,
circulating a chilling liquid through an evaporator of said absorption type chiller unit for extracting heat from the chilling liquid,
circulating the chilling liquid through an air cooling unit for cooling air, and
using only the electrical energy converted by the low pressure turbine (103) for operating pumps which provide said circulations of heated liquid, cooling liquid and chilling liquid.

10. Method of claim 9, wherein the method further comprises a step of controlling said circulations of said heated liquid, cooling liquid and chilling liquid based on available electrical energy from said low pressure turbine (103).

11. Method of claim 10, wherein the method further comprises a step of measuring temperatures of said heated liquid, cooling liquid and chilling liquid and controlling said circulations based on said measurements.
